(19) Europäisches Patentamt / European Patent Office / Office européen des brevets

(11) **EP 2 688 423 B1**

(12) **EUROPEAN PATENT SPECIFICATION**

(45) Date of publication and mention
of the grant of the patent:
**20.01.2016 Bulletin 2016/03**

(21) Application number: **12708336.8**

(22) Date of filing: **14.03.2012**

(51) Int Cl.:
*A23L 1/19* (0000.00)          *A23L 1/035* (0000.00)
*A23L 1/39* (0000.00)          *A23L 1/0522* (0000.00)
*A23L 1/0526* (0000.00)          *A23L 1/0532* (0000.00)

(86) International application number:
**PCT/EP2012/054411**

(87) International publication number:
**WO 2012/130611 (04.10.2012 Gazette 2012/40)**

(54) **EDIBLE OIL-IN-WATER EMULSION COMPOSITION**

ESSBARE ÖL-WASSER-EMULSIONSZUSAMMENSETZUNG

COMPOSITION D'ÉMULSION COMESTIBLE HUILE DANS L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2011 EP 11159841**

(43) Date of publication of application:
**29.01.2014 Bulletin 2014/05**

(73) Proprietors:
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC
London, Greater London EC4Y 0DY (GB)**
Designated Contracting States:
**CY GB IE MT**

(72) Inventors:
• **BOT, Arjen
NL-3133 AT Vlaardingen (NL)**
• **CASTENMILLER, Wilhelmus, Adrianus, M.
NL-3133 AT Vlaardingen (NL)**
• **DEUTZ, Inge, Elisabeth, M.
NL-3133 AT Vlaardingen (NL)**
• **KROON, Cornelis, Johannes
NL-3133 AT Vlaardingen (NL)**
• **RUTGERS VAN DER LOEFF, Anna Maria
NL-3133 AT Vlaardingen (NL)**

(74) Representative: **Fijnvandraat, Arnoldus
Unilever N.V.
Unilever Patent Group
Olivier van Noortlaan 120
3133 AT Vlaardingen (NL)**

(56) References cited:
**JP-A- 2006 025 690          JP-A- 2008 154 469
JP-A- 2010 239 933          US-A- 5 609 904
US-A1- 2005 123 667**

EP 2 688 423 B1

**Description**

**FIELD OF THE INVENTION**

The present invention relates to an edible oil-in-water emulsion composition, a method for the preparation of the edible oil-in-water emulsion composition, and use of the edible oil-in-water composition.

**BACKGROUND TO THE INVENTION**

The abbreviations DCA for Dairy Cream Alternative and SFAE for Sucrose Fatty Acid Ester are used throughout this description.

Dairy cream is a natural foodstuff which is much appreciated by both consumers and professionals for its diverse applications. Traditionally, it is either whipped before use or it is used as an additive or topping without whipping. In whipped form, it is for instance used as a topping on or filling in cakes, pastries, puddings, desserts, as a topping on beverages such as coffee and hot chocolate drinks, or on ice creams, or folded into mousses, purees, etcetera. It may be used as an additive without whipping in many different sweet or savoury food products, such as beverages, soups, sauces, ice creams, puddings, confectionary, pralines, etcetera. In most of its applications, the dairy cream is valued for its contribution to the richness in taste, texture, and mouthfeel of the food it is consumed with or incorporated in.

Dairy cream has several drawbacks: It is relatively expensive and, being a natural product, it has a limited shelf-life and shows fluctuations in its composition and hence in its properties. These fluctuations may lead to unexpected defects such as collapse of the whipped cream or phase separation (e.g. buttering or coagulation). These drawbacks have led to the development of substitute creams, so-called dairy cream alternatives (DCAs) that aim to be more cost-effective, or more consistent in their composition and hence more predictable in their applicability. DCAs are also known as dairy cream substitutes, analogues, or non-dairy creams.

Typical conventional DCAs are oil-in-water emulsions based on vegetable or dairy fats and/or oils, a source of protein (e.g. milk powder) and emulsifiers. A wide variety of emulsifiers have been used in DCA formulations. For instance, EP 0 294 119 A1, EP 0 436 994 B1, EP 0 455 288 A1 and WO 94/17672 A1 describe whippable DCAs comprising e.g. caseinates, lecithins, mono-/diglycerides of fatty acids, or polyoxyethylene sorbitan monostearates as emulsifiers.

Sucrose fatty acid esters (SFAEs) are emulsifiers which have also been used in DCAs and similar products. For instance, WO 2008/110502 A1 describes aeratable products comprising water, at least one vegetable oil, at least one salt and at least one sucrose ester. The invention relates to all types of sucrose esters (mixtures as well). Preferably, the invention relates to sucrose stearate (mono- or polyesters), sucrose palmitate (mono- or polyesters) and mixtures thereof. The examples disclose the use of SFAEs with HLBs ranging from 6 to 15, with tradenames SP30, SP50, and SP70 (manufactured by Sisterna B.V.). The objective of WO 2008/110502 A1 is to provide emulsions containing high levels of liquid oils which aerate well using conventional equipment and which have good foam stability.

JP 01-051054 A describes a high-protein low-fat acidic whipping cream, containing 20 to 42% of fats and oils (e.g. soybean oil), 2 to 10% of protein (e.g. milk protein or egg white), 0.05 to 2.5% of an alkali metal citrate (e.g. sodium citrate), an acidic substance (e.g. lactic acid) and an emulsifying agent and having a pH of between 3.5 and 5.5. Preferably, the emulsifying agent is selected from one or more of polyglycerol esters of fatty acids, soybean lecithin with enhanced O/W type emulsifiability, and sucrose esters. Preferably, the sucrose esters have a high content of monoester (more than 80% monoester content). The objective of JP 01-051054 A is to provide a high-protein low-fat acidic whipping cream with a pH of 3.5 to 5.5 that does not solidify during preparation. The document teaches that this objective can be met by an acidic whipping cream comprising an alkali metal citrate and an emulsifying agent.

EP 0 402 090 B1 describes oil-in water emulsion compositions which exhibit a rich fatty flavour even at a lowered fat content. The oil-in-water emulsion may comprise about 0.2 percent of a SFAE.

EP 1 430 790 B1 describes a foaming oil-in-water type emulsion comprising fats and saccharides as main components and containing from 30 to 55% by weight of total solid matters. The composition may comprise about 0.2 percent of a sugar ester (trade name S-570, manufactured by Mitsubishi-Kagaku Foods Corporation).

JP 56-021553 A describes a whippable emulsified fat composition comprising two emulsifying agents (A) and (B); wherein (A) is one or more selected from lecithin and an unsaturated fatty acid ester of sorbitan and (B) is one or more selected from a fatty acid ester of sucrose and a saturated fatty acid ester of sorbitan, and wherein the amount of ingredient (A) is 0.05-0.29wt% based on fats and oils and the amount of ingredient (B) is 0.7-2wt% based on fats and oils.

US 2009/0291183 A1 describes a cream composition, comprising milk fat, a sugar, and water, wherein the content of the milk fat is more than 5 mass % and 30 mass % or less, the content of the sugar is 40 to 65 mass %, and the median diameter of the composition is 0.2 to 4.0 micrometer, and the viscosity of the composition at 20 degrees C is 100 to 2500 mPa·s. The cream composition is for use as an additive, and may contain SFAEs, for instance 0.7 %weight of the SFAEs with trade names S570, S770 or P1670 (manufactured by Mitsubishi-Kagaku Foods Corporation). US 2009/0291183 also describes a whipped cream based on the cream composition comprising S570.

JP 2008-154469 discloses an oil-in-water emulsion to be used for food comprising whey protein, polyglycerol condensed ricinoleate, sucrose fatty acid ester (SFAE), and carrageenan. The composition is aimed at improving the heat and acid resistance of edible oil in water emulsions and also at reducing the level of foaming of the composition upon processing. The SFAE may be any SFAE, though it is preferred to use a combination of two SFAEs, one with not more than 1 %-wt monoester and one with more than 50 %-wt monoesters. JP 2008-154469 discloses examples compositions comprising 1 %-wt of whey protein and 0.6 to 1.0 %-wt of a SFAE with 75% monoester content (S-1670 ex Mitsubishi-Kagaku Foods Corporation). These compositions were only disclosed to be whippable when combined with a conventional whipping cream in a 2:8 ratio and at a pH of 4

US 2005/0123667 aims to provide an oil/fat powder containing diglycerides (15 to 94.9 wt-%) with excellent dispersibility in water and good dispersibility in powders such as protein and carbohydrate. The powder is preferably used for the preparation of oil/fat-containing processed foods, such as powdered drink, dried soup, or bakery products.

## SUMMARY OF THE INVENTION

Since it is desirable that DCA compositions can be used in a wide range of applications, there is a need for a single DCA formulation that can be used for a broad range of purposes without defects. However, conventional DCAs are usually not multipurpose products. Rather they are either suited for whipping applications or as an additive (i.e. without whipping) in drinks, sauces, soups and tend to show defects when they are used in other applications. In contrast, a multipurpose DCA composition should combine good behaviour in many different applications. That is, a multipurpose DCA should meet as many as possible of the following requirements:

- no off-taste, neutral taste
- a neutral pH
- good whippability
- little post-hardening of the whipped product
- good stability of the whipped product at room temperature
- good stability against aggregation when heated when used as an additive (without whipping)
- good stability against aggregation when used as an additive at low pH (both at low and at high temperature)

Hence it is an objective of the present invention to provide for a neutral edible oil-in-water emulsion composition that is usable as a multipurpose DCA composition. It is a further objective of the present invention to provide for a neutral edible oil-in-water emulsion composition that fulfils as many as possible of the above requirements for a multipurpose DCA. It is another objective of the present invention to provide for a neutral edible oil-in-water emulsion composition which can be applied in a wide range of dishes and foodstuffs without the occurrence of defects, preferably within a wide range of temperatures. Furthermore, it is a particular objective of the present invention to provide for a neutral edible oil-in-water composition that has both good whipping properties and does not show aggregation or coagulation in hot acidic foodstuffs such as sour soups or wine sauces.

We have found that one or more of these objectives can be met by our invention. Our invention shows that edible oil-in-water emulsion compositions comprising sucrose fatty acid esters wherein at least 70 wt% of the total amount of sucrose fatty acid esters is sucrose monostearate or sucrose monopalmitate or a combination thereof, and wherein the sucrose fatty acid esters have a hydrophilic to lipophilic balance (HLB) of greater than 15, meet the objectives stated above. In particular, edible oil-in-water emulsion compositions according to this invention are both whippable and do not aggregate or coagulate upon use without whipping in hot acidic media such as sour Polish-style tomato soup or white wine sauce.

Accordingly in a first aspect the present invention provides an edible oil-in-water emulsion composition comprising

| 18 to 50 wt% | of a fat phase, |
| 1.5 to 4 wt% | of protein, |
| 0.2 to 1 wt% | of sucrose fatty acid esters wherein |
| | at least 70 wt% of the total amount of sucrose fatty acid esters is sucrose monostearate or sucrose monopalmitate or a combination thereof, and |
| at least 35 wt% | of water; |

and wherein

    i. the composition has a pH of between 6 and 8;

ii. the sucrose fatty acid esters have a hydrophilic to lipophilic balance (HLB) of greater than 15; and
iii. the composition comprises 5 to 10 wt% of concentrated milk derivatives, such as buttermilk powder, skimmed milk powder, or whole milk powder.

A second aspect of the invention is a process to prepare the edible oil-in-water emulsion composition.

A third aspect of the invention is the use of an edible oil-in-water emulsion composition according to the present invention as a whipping cream.

A fourth aspect of the invention is the use of an edible oil-in-water emulsion composition according to the first aspect of the invention as an additive in a food product, preferably in a liquid food product or a solid or solidifiable food product.

## DETAILED DESCRIPTION OF THE INVENTION

All percentages are weight/weight percentages unless otherwise indicated. Except in the examples, or where otherwise explicitly indicated, all numbers in this description indicating amounts of material or conditions of reaction, physical properties of materials and/or use are to be understood as modified by the word "about". Unless specified otherwise, numerical ranges expressed in the format "from x to y" are understood to include x and y. When for a specific feature multiple preferred ranges are described in the format "from x to y", it is understood that all ranges combining the different endpoints are also contemplated.

For the purpose of the invention ambient temperature is defined as a temperature of about 20 degrees Celsius. The terms 'oil' and 'fat' are used interchangeably unless specified otherwise and concern edible oils and fats. Where applicable the prefix 'liquid' or 'solid' is added to indicate if the fat or oil is liquid or solid at ambient temperature as understood by the person skilled in the art.

The present invention relates to an edible oil-in-water emulsion composition. Preferably, the present invention relates to an edible water-in-oil emulsion which is a multipurpose dairy cream alternative composition. For the purpose of this invention, a dairy cream alternative (DCA) composition is considered to be a multipurpose DCA composition, if it can be used for many different applications, ranging a similar scope as the application of real dairy cream. For instance, a multipurpose DCA should be applicable as a whipping cream and as an additive (without whipping) in the same way as described above for dairy cream, without the occurrence of defects such as buttering, phase separation, aggregation or coagulation.

In addition, to meet consumer expectations of a multipurpose DCA product, it is essential that the product has a neutral taste, since real dairy cream has a neutral pH. Therefore, the edible emulsion composition of the present invention has a pH of between 6 and 8, preferably between 6.5 and 7.5. A DCA composition with a pH outside these ranges would be severely limited in its potential applications and might lead to defects in some potential applications. Hence, a DCA composition with a pH outside these ranges would not be acceptable to consumers and professionals as a multipurpose DCA composition.

<u>Fats and oils</u>

The fat phase is an essential feature of a DCA composition. Such a fat phase typically comprises edible fats and oils. The edible oil-in-water emulsion composition of the present invention comprises 18 to 50 wt% of a fat phase. The edible oil-in-water emulsion composition of the present invention preferably comprises 20 to 45 wt%, more preferably 22 to 40 wt%, and still more preferably 25 to 35% of a fat phase.

The fat phase preferably comprises a sufficient amount of solid fat at low temperatures in order to yield a whippable emulsion composition. Simultaneously, in order to instil desirable organoleptic properties in terms of mouthfeel and appearance, the fat phase preferably essentially melts in the mouth upon consumption. Therefore, an edible oil-in-water emulsion composition wherein the fat phase has a solid fat content of 40 wt% or more at 5 degrees C, and of 5 wt% or less at 35 degrees C is preferred.

Preferably, the fat phase has a solid fat content of 50 wt% or more at 5 degrees C. Preferably, the fat phase has a solid fat content of 3 wt% or less at 35 degrees C.

These solid fat contents are given in wt% with respect to the fat phase. A suitable way to determine the solid fat content of an oil-in-water emulsion is by NMR using standard pulse methods.

A suitable fat phase may be derived from many different fat sources, including e.g. animal fats such as e.g. milk fat. The fat phase of the edible oil-in-water emulsion composition according to the present invention preferably comprises vegetable oil or vegetable fat or a combination thereof. The vegetable fats or oils may suitably be derived from coconut oil, palm oil, palm kernel oil, rapeseed oil, linseed oil, soy bean oil, maize oil, sunflower oil, or mixtures thereof. Vegetable fats may be hardened, partially hardened or interesterified by conventional means in order to achieve desirable solid fat contents at different temperatures. Preferably, the fats of the fat phase consist of a mixture of coconut oil, palm kernel oil and rapeseed oil. More preferably, the fats of the fat phase consist of a mixture of coconut oil and substantially saturated palm kernel oil. Suitable is for instance palm kernel oil that is hardened to a slip melting point of 38 degrees C.

Proteins

Proteins are an essential ingredient in DCA compositions, since they impart desirable structure, taste and stabilising properties to the oil-in-water emulsion compositions and may enhance whippability. In particular dairy proteins may contribute to the taste and stability of the emulsion. Hence, dairy constituents are a preferred source of proteins. Therefore, the proteins included in the edible oil-in-water emulsion composition according to the present invention preferably comprise dairy proteins. Preferably, the protein comprised in the oil-in-water emulsion composition of the present invention substantially consists of dairy protein.

Dairy proteins derive from milk (preferably cow's milk) or concentrated milk derivatives such as condensed milk, evaporated milk, or dried milk powders, such as skimmed milk powder (SMP), buttermilk powder (BMP), or whole milk powder (WMP). Milk powders typically have proteins, carbohydrates and optionally milk fat as their main constituents. For instance, skimmed milk powder typically comprises about 35 to 37 wt% protein and buttermilk powder normally comprises about 33 to 36 wt% protein.

Milk constituents may contribute to the good sensory properties of a DCA composition by bringing the consumer experience closer to that of dairy cream. Therefore, the edible oil-in-water emulsion composition according to the present invention comprises 5 to 10 wt% of concentrated milk derivatives, wherein the concentrated milk derivatives are preferably selected from buttermilk powder, skimmed milk powder and combinations thereof.

We have found that the proteins are essential in combination with the sucrose fatty acid esters for obtaining a satisfactory multipurpose DCA. In particular, they impart the right whippability characteristics to the dairy cream alternative. Moreover, they contribute to the taste and stability of the emulsion. In particular, we have found that it is essential that the composition according to the invention comprises 1.5 to 4 wt% of the specified proteins. The composition preferably comprises 1.7 to 3.5 wt%, more preferably 1.8 to 3 wt%, even more preferably 1.9 to 2.5 wt% of the protein. Below the lower boundary, the behaviour of the composition upon whipping gets unpredictable in terms of firmness, whipping time and further processability. Such unpredictability is extremely undesirable to professional and domestic users of DCA products. Moreover, if the protein content of the composition is below the lower boundary, the composition does not exhibit the rich and creamy taste that consumers require of a DCA. Above the specified upper boundary, the excess of protein leads to an emulsion that is too thick. In general, in such cases, even a premix of the constituents has too high a viscosity to be able to be processed into a homogenised oil-in-water emulsion.

In an alternative embodiment, the composition according to the present invention comprises milk or liquid concentrated milk derivatives as the source of dairy proteins. The liquid concentrated milk derivatives are preferably condensed milk or evaporated milk. Thus, in this alternative, the edible oil-in-water emulsion composition according to the invention preferably comprises

| | |
|---|---|
| 18 to 50 wt% | of a fat phase |
| 1.5 to 4 wt% | of protein |
| 0.2 to 1 wt% | of sucrose fatty acid esters wherein |
| | at least 70 wt% of the total amount of sucrose fatty acid esters is sucrose monostearate or sucrose monopalmitate or a combination thereof, and |
| at least 35 wt% | of water; |

and wherein

    i. the composition has a pH of between 6 and 8;
    ii. the sucrose fatty acid esters have a hydrophilic to lipophilic balance (HLB) of greater than 15; and
    iii. the composition comprises milk or liquid concentrated milk derivatives as a source of proteins.

Sucrose fatty acid esters

Sucrose fatty acid esters (SFAEs) are a class of emulsifiers that are suitable for food applications. SFAEs may be prepared by the (partial) esterification of sucrose with fatty acids. Since sucrose has eight hydroxyl groups, the degree of substitution obtained can vary from one to eight, thus yielding sucrose monoesters, sucrose diesters, sucrose triesters, etcetera up to sucrose octaesters.

SFAEs can be prepared with any type of fatty acid. Suitable fatty acids may vary both in alkyl chain length and in degree of unsaturation. Suitable fatty acids are saturated fatty acids including but not limited to capric acid, lauric acid, myristic acid, palmitic acid, stearic acid, arachic acid, behenic acid, lignoceric acid or cerotic acid. Likewise, monounsaturated fatty acids including but not limited to lauroleic acid, myristoleic acid, palmitoleic acid, oleic acid, gadoleic acid or erucic acid are also suitable. Similarly, polyunsaturated fatty acids including but not limited to linoleic acid, linolenic acid, elaeostearic acid, arachidonic acid or cervonic acid are suitable too.

SFAEs can also be mixtures of different compounds. In one way, mixtures of SFAEs may be mixtures in terms of compounds with a different degree of substitution. In a second way, mixtures of SFAEs may be mixtures of compounds with different types of fatty acids. Mixtures of SFAEs may also be mixtures according to the first and the second ways simultaneously. For example, a SFAE mixture with both palmitic acid and stearic acid residues may for instance comprise sucrose monostearate, sucrose monopalmitate, sucrose distearate, sucrose dipalmitate, monopalmitoyl sucrose monostearate, dipalmitoyl sucrose monostearate, etcetera. For the purpose of this invention the term sucrose fatty acid ester (SFAE) is intended to include both single compounds and mixtures of single compounds according to the above two ways, unless specified otherwise.

Commercially, food-grade SFAEs may be obtained from suppliers like Mitsubishi-Kagaku (Tokyo, Japan) or Sisterna (Roosendaal, The Netherlands).

Apart of their structure, SFAEs or mixtures of SFAEs may also be characterised by their properties. The most noteworthy property is their hydrophilic-lipophilic balance or HLB value. HLB values are a well-known classification of surfactants or mixtures of surfactants, based on the ratio of the hydrophilic and hydrophic portions of the surfactant molecules. HLB values of surfactants range from 0 to 20, where HLB 0 is the hydrophobic and HLB 20 the hydrophilic end of the range.

A selection of SFAEs is required in order to obtain an edible oil-in-water emulsion composition which has both good whipping properties and which does not show aggregation or coagulation when used as an additive without whipping in hot acidic foodstuffs such as sour soups or wine sauces (e.g. with a pH between about 3 and 4.7 and a temperature of more than 80 degrees C).

Therefore, an edible oil-in-water emulsion composition according to the first aspect of the present invention comprises 0.2 to 1 wt% of sucrose fatty acid esters wherein
at least 70 wt% of the total amount of sucrose fatty acid esters is sucrose monostearate or sucrose monopalmitate or a combination thereof.

An edible oil-in-water emulsion composition according to the present invention preferably comprises from 0.2 to 0.50 wt%, more preferably from 0.25 to 0.45 wt%, still more preferably from 0.27 to 0.40 wt% and even more preferably from 0.28 to 0.35 wt% of the sucrose fatty acid esters.

Preferably, at least 72 wt%, more preferably at least 74 wt% of the sucrose fatty acid esters is sucrose monostearate or sucrose monopalmitate or a combination thereof.

For instance, sucrose fatty acid esters wherein at least 76 wt%, 78 wt%, or 80 wt% of the total amount of sucrose fatty acid esters is sucrose monostearate or sucrose monopalmitate or combinations thereof are preferred.

Preferably, from 10 to 90 wt%, more preferably from 20 to 80 wt% of the total amount of the sucrose fatty acid esters is sucrose monostearate.

Preferably, from 10 to 90 wt%, more preferably from 20 to 80 wt% of the total amount of the sucrose fatty acid esters is sucrose monopalmitate.

The sucrose fatty acid esters preferably have a hydrophilic to lipophilic balance (HLB) of 16 or higher. For instance, they have a HLB of 17, 18, 19 or 20.

Preferably, the combined amount of sucrose fatty acid monoesters and sucrose fatty acid diesters comprised in said sucrose fatty acid esters is at least 75 wt%, preferably at least 80 wt%, more preferably at least 85 wt% and still more preferably at least 90 wt% of the total amount of sucrose fatty acid esters.

Other emulsifiers

In addition to the SFAEs, an edible oil-in-water emulsion composition according to the present invention may also comprise other emulsifiers or mixtures of emulsifiers. For instance, substantially fat-soluble emulsifiers may improve the whipping properties of a DCA emulsion composition. Therefore, an edible oil-in-water emulsion composition according the present invention preferably comprises 0.01 to 0.4 wt% of fat-soluble emulsifiers. Preferably, the fat-soluble emulsifiers are selected from monoglycerides, diglycerides, lecithins, lactic acid esters of mono- and diglycerides of fatty acids, diacetyl tartaric acid esters of mono- and diglycerides of fatty acids, and combinations thereof.

Monoglycerides and diglycerides are partial esters of fatty acid esters and glycerol. Lecithins may for instance be derived from egg lecithin, soy lecithin, or sunflower lecithin. Lecithins may be used in crude or in refined form. Similar substances like phospholipids or phophatidylcholines may also be used.

Lactic acid esters of mono- and diglycerides of fatty acids are also known as Lactem. Diacetyl tartaric acid esters of mono- and diglycerides of fatty acids are also known as Datem.

The edible oil-in-water emulsion composition according to the present invention may also comprise further water-soluble emulsifiers or mixtures of emulsifiers, such as for instance polyoxyethylene sorbitan esters.

Thickeners

Thickeners may be applied to regulate the viscosity of the DCA emulsion composition, or to suppress phase separation and/or creaming. Therefore, the edible oil-in-water emulsion composition according to the present invention preferably comprises 0.3 to 2.5 wt% of thickeners, preferably selected from starches and gums. The composition preferably comprises 0.3 to 2 wt% starch and 0.01 to 0.5 wt% gums

Starches may be derived from natural starches, including for instance maize, rice, tabioca or potato starches. The starches may also be selected from modified starches.

Gums may for instance be selected from gums like guar gum, locust bean gum, carrageenan, xanthan gum, agar agar, alginates and combinations thereof. Preferably, the gums are selected from guar gum, locust bean gum, carrageenan and combinations thereof.

Other hydrocolloids or oligosaccharides with similar properties may also be applied, for instance pectins, gelatins, celluloses, collagens, or citrus fibres.

Additional ingredients

The edible oil-in-water emulsion composition according the present invention may also comprise any other common ingredients, for instance selected from sugars, sweeteners, flavourings, aroma compounds and combinations thereof, to improve the organoleptic properties and any other properties. Additionally, the oil-in-water emulsion composition may also comprise antioxidants or preservatives to improve its shelf-life.

Properties

A multipurpose DCA composition is preferably usable as a whipping cream alternative. Therefore, the edible oil-in-water emulsion composition according to the present invention is preferably whippable to an overrun of at least 120%, more preferably at least 150%.

Therefore, the present invention also relates to the composition according to the first aspect of our invention in the whipped state, having an overrun of at least 120%, more preferably at least 150%, and still more preferably between 150% and 250%.

The composition in the whipped state may also be used as an additive in foods.

A multipurpose DCA composition preferably also is applicable as an additive without whipping in a wide variety of dishes and foodstuffs without showing defects. Therefore, the edible oil-in-water emulsion composition according to the present invention preferably does not aggregate or phase-separate upon dilution in a food product which may be heated and wherein the food product has a pH of between 3 and 8. The food product may be a liquid food product. The composition preferably is applicable in acidic food products. Therefore, the food product may also have a pH of between 3 and 5.5, between 3.1 and 5 or between 3.3 and 4.5. The food product preferably has a temperature between about minus 20 degrees C and about 120 degrees C, more preferably between 0 degrees C and 100 degrees C, yet more preferably between 20 degrees C and 100 degrees C and even more preferably between 60 degrees C and 100 degrees C.

Process

The invention also relates to a process for manufacturing the edible oil-in-water emulsion composition, comprising the steps of

    a. preparing an aqueous phase,
    b. preparing a fat phase, and
    c. mixing the aqueous phase and the fat phase and homogenising the mixture to an edible emulsion.

The aqueous phase preferably comprises water, the proteins, the SFAE and (if present) any other water-soluble or easily dispersible constituents, like for instance gums, starches, water-soluble emulsifiers, sugar etc. The fat phase preferably comprises the fats and oils, (if present) fat-soluble emulsifiers and any other fat-soluble constituents.

The process according to the present invention may also include a pasteurisation or sterilisation process, to enhance the shelf life of the product. Homogenisation may also include a high-pressure homogenisation process. After preparation, the edible emulsion may for instance be hot-filled or cold-filled into suitable containers.

However, the above way of combining constituents in an aqueous and a fat phase may lead to highly undesirable foaming of the composition during the manufacturing process. Such excessive foaming seriously affects the processability and stability of the product. A possible solution to this problem might be to reformulate the composition, as for instance disclosed in JP 2008/154469. However, such reformulating is highly undesirable, since the components of the emulsion of the present invention are carefully tuned to provide a versatile multipurpose DCA. We have surprisingly solved the foaming problem by adapting the above process for manufacturing the edible oil-in-water emulsion composition. The adaptation entails adding the sucrose fatty acid ester during step c of the above process.

Therefore, it is preferred that during the process for manufacturing the edible oil-in-water emulsion composition, at least 50 wt-%, more preferably at least 75 wt-%, even more preferably at least 90 wt-% and still more preferably substantially all of the sucrose fatty acid ester is added during step c. In other words, the indicated portion of the sucrose fatty acid ester is preferably not added during step a.

In this way it is ensured that excessive foaming of the composition during the manufacturing process is suppressed. According to this preferred process, the SFAE is added to the mixture that results after at least part of the water phase is contacted with at least part of the fat phase. The SFAE may thus also be added after all of the water phase and all of the fat phase have been mixed, as long as the addition of the SFAE is complete before the mixture is subjected to optional high pressure homogenisation. Adding a small amount of SFAE to the water phase before step c would not lead to detrimental foam formation, but adding more than 50 wt-% would.

Use

The composition of the edible oil-in-water emulsion composition, makes it applicable as a multipurpose DCA composition. Therefore, according to the third aspect of the invention, the present invention also relates to use of an edible oil-in-water emulsion composition according to the present invention as a whipping cream. A whipping cream should yield whipped creams that are sufficiently aerated and sufficiently firm. Therefore, the invention preferably relates to use of an edible oil-in-water emulsion composition according to the present invention to create a whipped cream with an overrun of at least 120%, preferably at least 150%, and more preferably between 150% and 250% and a Stevens value of preferably at least 35, more preferably at least 70.

Upon whipping, the composition may increase in stiffness and, upon aeration, in volume. Usage may also include combination of the composition in whipped state with other ingredients, like fruit juice, chocolate etc., or applying the whipped cream as topping, for piping, mousses etc.

When used as a whipped cream, the composition of the present invention advantageously displays many desirable properties: It shows little or no post-hardening upon storage at 5 degrees C for 24 hours. Post-hardening is an increase of the firmness beyond what is considered acceptable by consumers. The composition also shows good room temperature stability against post-hardening, or softening and synaeresis, and good shape retention upon piping. These properties are even maintained when for instance an acidic fruit puree is folded into the whipped cream.

Here, synaeresis indicates the loss of fluid from the whipped cream, e.g. by droplet formation, or expulsion, precipitation or leaking of fluid from the whipped cream.

According to the fourth aspect of the invention, the present invention also relates to use of an edible oil-in-water emulsion composition according the present invention as an additive in a food product, preferably a liquid food product or a solid or solidifiable food product. Thus, the composition may be added for instance to hot beverages such as coffee or tea, or to soups or oven dishes. The composition can also be used in solidifiable food products such as cake batters, puddings, creme brûlees, panacottas, omelettes, gratins, ice creams etc. The composition may also be used as a topping, for instance on cakes, pies or puddings.

The multipurpose DCA composition according to the present invention in particular shows excellent properties as an additive in a wide variety of dishes and foodstuffs with challenging conditions without showing defects. That is, the stability of the oil-in-water emulsion composition of the present invention is not much affected by pH or temperature within a range usually encountered for foodstuffs. Therefore, the present invention preferably also relates to the use of an edible oil-in-water emulsion composition according to the present invention as an additive in a food product, wherein the food product has a pH of between 3 and 8 and preferably with a temperature of between minus 20 degrees C and 120 degrees C.

The food product preferably has a pH of between 3 and 5.5, more preferably between 3.1 and 5 and even more preferably between 3.5 and 4.5. The food product preferably has a temperature between 0 degrees C and 100 degrees C, more preferably between 20 degrees C and 100 degrees C and even more preferably between 60 degrees C and 100 degrees C. Thus use according to the fourth aspect of the invention also relates to use in acidic food products or hot or cold food products.

Preferably, the use of the edible oil-in-water emulsion composition according to the fourth aspect of the present invention relates to use as an additive in an acidic, creamy tomato soup, wherein the soup is preferably prepared by mixing water, tomato concentrate and stock, subsequently heating the mixture, preferably to 100 degrees C, and mixing in from 5 to 50 wt% of the edible oil-in-water emulsion composition.

Similarly preferably, such use of the edible oil-in-water emulsion composition according to the fourth aspect of the present invention also relates to use as an additive in an acidic reduction sauce, wherein the sauce preferably comprises white wine and the edible oil-in-water emulsion of the present invention and wherein the sauce is preferably prepared by a method comprising one or more, preferably two or more, reduction steps, wherein preferably at least one reduction step takes place before addition of the oil-in-water emulsion composition and at least one reduction step takes place after addition of the oil-in-water emulsion composition. A reduction step is characterised by a reduction of the volume and mass of the total sauce mixture by evaporation whilst heating. A reduction step typically involves a reduction in weight of 10 to 90 % of the weight of the mixture before reduction.

In the latter uses, the edible oil-in-water emulsion composition of the present invention in acidic liquid media advantageously does neither visibly flocculate nor aggregate. Thus, these demonstrate that the composition is a multipurpose DCA composition.

## DESCRIPTION OF FIGURES

**Figure 1** shows a Polish-style tomato soup prepared with the composition of Example 2.
**Figure 2** shows a close-up of Figure 1.
**Figure 3** shows a Polish-style tomato soup prepared with the composition of Comparative Example C2.
**Figure 4** shows a close-up of Figure 3.
**Figure 5** shows a spread-out sample of a white wine reduction sauce prepared with the composition of Example 3.
**Figure 6** shows a spread-out sample of a white wine reduction sauce prepared with the composition of Comparative Example C5.
**Figure 7** shows a spooned sample of a white wine reduction sauce prepared with the composition of Example 3.
**Figure 8** shows a spooned sample of a white wine reduction sauce prepared with the composition of Comparative Example C5.

## EXAMPLES

The invention is illustrated by the non-limiting examples and comparative examples described below.

## Materials

The sucrose fatty acid esters (SFAEs) used in the examples (Tables 2, 3, and 4 below) were obtained from Mitsubishi-Kagaku (Tokyo, Japan) or (Sisterna B.V., Roosendaal, The Netherlands) and are characterised as in Table 1.

**Table 1**

| name | supplier | HLB | monoester content (approx.) | Fatty acid residue composition (approx.) |
|---|---|---|---|---|
| S-1670 | Mitsubishi Kagaku | 16 | 75% | 70% stearate 30% palmitate |
| P-1670 | Mitsubishi Kagaku | 16 | 80% | 70% palmitate 30% stearate |
| S-770 | Mitsubishi Kagaku | 7 | 40% | 70% stearate 30% palmitate |
| SP50 | Sisterna | 11 | 50% | stearate / palmitate |
| SP70 | Sisterna | 15 | 70% | stearate / palmitate |
| PS750 | Sisterna | 16 | 75% | palmitate / stearate |
| L-1695 | Mitsubishi Kagaku | 16 | 80% | 95% laurate |
| OWA-1570 | Mitsubishi Kagaku | 15 | 70% | 70% oleate |

9

Additionally, unless specified otherwise below, the starch used was obtained from National Starch (Bridgewater, NJ, USA); the carrageenan, Lactem, Polyglycerol polyricinoleate (PGPR), and monoglycerides from Danisco (Copenhagen, Denmark), and soybean lecithin was obtained from Cargill (Minneapolis, MN, USA). WPC80 is a whey protein concentrate comprising ca 80% whey protein. Fats were obtained from Unimills (Zwijndrecht, The Netherlands) and were blended into mixtures with the following solid fat contents (SFC) specifications:

Fat blend A:    N-5 = 60.6 wt%;    N-35 = 2.0wt%
Fat blend B:    N-5 = 91 wt%;    N-35 = 2wt%

Here N-5 denotes the SFC at 5 degrees C and N-35 denotes the SFC at 35 degrees C.

**Composition**

The Examples 1 and 2 of dairy cream alternative compositions (DCAs) according to the present invention and the Comparative examples C1 and C2 comprised the ingredients as specified in Table 2. Example 3 and Comparative Examples C3 to C9 comprised the ingredients as specified in Tables 3 and 4. The Examples 4 to 8 comprised the ingredients as specified in Table 5. The comparative DCA examples C10 to C12 comprised the ingredients as specified in Table 6.

**Table 2**

|  | Model formulations: | 1 | 2 | C1 | C2 |
|---|---|---|---|---|---|
|  | Ingredients | wt% | wt% | wt% | wt% |
| aqueous phase | butter milk powder | 3 | 3 | 3 | 3 |
|  | skim milk powder | 2 | 2 | 2 | 2 |
|  | waxy maize starch | 1.5 | 1.5 | 1.5 | 1.5 |
|  | guar gum | 0.1 | 0.1 | 0.1 | 0.1 |
|  | Carrageenan | 0.025 | 0.025 | 0.025 | 0.025 |
|  | S-1670 | 0.3 | - | - | - |
|  | P-1670 | - | 0.3 | - | - |
|  | L-1695 | - | - | 0.3 | - |
|  | OWA-1570 | - | - | - | 0.3 |
|  | water | balance | balance | balance | balance |
| fat phase | Fat blend A | 19.5 | 19.5 | 19.5 | 19.5 |
| protein content (wt%) |  | 2 | 2 | 2 | 2 |
| pH |  | 6.9 | 6.9 | 6.9 | 6.9 |

**Table 3**

|  | Example: | 3 | C3 | C4 | C5 |
|---|---|---|---|---|---|
|  | Ingredients | wt% | wt% | wt% | wt% |
| aqueous phase | Skim milk powder | 5.88 | 2.94 | 15.24 | - |
|  | WPC80 | - | - | - | 1.25 |
|  | starch | 1.5 | 1.5 | 1.5 | 1.5 |
|  | guar gum | 0.1 | 0.1 | 0.1 | 0.1 |
|  | Carrageenan | 0.25 | 0.25 | 0.25 | 0.25 |
|  | S-1670 | 0.3 | 0.3 | 0.3 | 0.3 |

(continued)

| Example: | | 3 | C3 | C4 | C5 |
|---|---|---|---|---|---|
| | Ingredients | wt% | wt% | wt% | wt% |
| | PGPR | - | - | - | - |
| | water | balance | balance | balance | balance |
| fat phase | Fat blend A | 19.4 | 19.4 | 19.4 | 19.4 |
| total protein content (wt%) | | 2 | 1 | 5.12 | 1 |
| whey protein content (wt%) | | 0.38 | 0.19 | 1 | 1 |
| pH | | 6.5 | 6.7 | 6.2 | 6.7 |

**Table 4**

| Example: | | C6 | C7 | C8 | C9 |
|---|---|---|---|---|---|
| | Ingredients | wt% | wt% | wt% | wt% |
| aqueous phase | Skim milk powder | - | 1.85 | 3.7 | - |
| | WPC80 | 2.5 | 0.47 | 0.94 | 1.25 |
| | starch | 1.5 | 1.5 | 1.5 | 1.5 |
| | guar gum | 0.1 | 0.1 | 0.1 | 0.1 |
| | Carrageenan | 0.25 | 0.25 | 0.25 | 0.25 |
| | S-1670 | 0.3 | 0.3 | 0.3 | 0.3 |
| | PGPR | - | - | - | 0.15 |
| | water | balance | balance | balance | balance |
| fat phase | Fat blend A | 19.4 | 19.4 | 19.4 | 19.4 |
| total protein content (wt%) | | 2 | 1 | 2 | 1 |
| whey protein content (wt%) | | 2 | 0.5 | 1 | 1 |
| pH | | 6.3 | 6.6 | 6.3 | 6.3 |

**Table 5**

| | | Examples | | | | |
|---|---|---|---|---|---|---|
| | | 4 | 5 | 6 | 7 | 8 |
| | Ingredients | wt% | wt% | wt% | wt% | wt% |
| aqueous phase | butter milk powder | 7.08 | 4 | 4 | 4 | 4 |
| | skim milk powder | - | 3 | 3 | 3 | 3 |
| | starch | 0.6 | 0.6 | 0.6 | 0.6 | 0.7 |
| | guar gum | 0.056 | 0.056 | 0.056 | 0.056 | 0.056 |
| | Locust bean gum | 0.019 | 0.019 | 0.019 | 0.019 | 0.019 |
| | S-1670 | 0.3 | 0.3 | - | - | 0.3 |
| | P-1670 | - | - | 0.3 | - | - |
| | PS750 | - | - | - | 0.3 | - |
| | water | balance | balance | balance | balance | balance |

(continued)

|  |  | Examples | | | | |
|---|---|---|---|---|---|---|
|  |  | **4** | **5** | **6** | **7** | **8** |
|  | **Ingredients** | wt% | wt% | wt% | wt% | wt% |
| fat phase | Fat blend B | 30 | 30 | 30 | 30 | 30 |
|  | monoglycerides | 0.1 | 0.1 | 0.1 | 0.1 | 0.1 |
|  | soybean lecithin | 0.05 | 0.05 | 0.05 | 0.05 | - |
|  | Lactem | - | - | - | - | 0.15 |
| additional | colorant | trace | trace | trace | trace | trace |
| protein content (wt%) | | 2.5 | 2.5 | 2.5 | 2.5 | 2.5 |
| pH | | 6.9 | 6.9 | 6.9 | 6.9 | 6.9 |

**Table 6**

|  |  | Comparative examples | | |
|---|---|---|---|---|
|  |  | **C10** | **C11** | **C12** |
|  | **Ingredients** | wt% | wt% | wt% |
| aqueous phase | butter milk powder | 4 | 4 | 4 |
|  | skim milk powder | 3 | 3 | 3 |
|  | starch | 0.6 | 0.6 | 0.6 |
|  | guar gum | 0.056 | 0.056 | 0.056 |
|  | Locust bean gum | 0.019 | 0.019 | 0.019 |
|  | S770 | 0.3 | - | - |
|  | SP50 | - | 0.3 | - |
|  | SP70 | - | - | 0.3 |
|  | water | balance | balance | balance |
| fat phase | Fat blend B | 32 | 32 | 30 |
|  | monoglycerides | 0.1 | 0.1 | 0.1 |
|  | soybean lecithin | 0.05 | 0.05 | 0.05 |
| additional | colorant | trace | trace | trace |
| protein content (wt%) | | 2.5 | 2.5 | 2.5 |
| pH | | 6.9 | 6.9 | 6.9 |

**Preparation**

For each emulsion, the preparation took place by an emulsification process, comprising the following steps.

- The fat-phase ingredients were combined in a suitable container heated to 60 to 80 degrees C and mixed until the mixture is clear.
- In a separate container, the aqueous phase ingredients were added to water at 60 to 80 degrees C.
- The fat phase and the aqueous phase were combined, mixed with a high shear mixer for at least 5 minutes, and subsequently heated to 88 degrees C.
- The mixture was sterilised by treatment with steam (145°C) for 4.8 seconds.
- The emulsion thus obtained was cooled down to about 80 °C and homogenised (in a two-stage homogeniser) at a pressure of 100 bar.

- The resulting sterilised and homogenised product was cooled to 8 to 10 degrees C, packed into aseptic containers, sealed and stored at 5 degrees C.

**Application tests**

The compositions described above were tested for their suitability as multipurpose dairy cream alternatives by means of the following application tests.

*Whippability*

Typically, 0.5 to 1 litre of the emulsion composition was whipped using a professional mixer until the cream reached a maximum in volume and a sufficient firmness to adhere to the whisk. The whipping time required, and the Stevens value were recorded, as well as the obtained overrun.

Stevens values give an indication about the hardness (also called firmness) of a product. The Stevens value is determined according to the following protocol. After stabilisation at either 5 or 20 degrees Celsius the hardness of the product is analysed at the stabilisation temperature with a TA-XT2 Texture Analyser (Stable Micro Systems, Godalming, Surrey, UK) equipped with a perspex probe with a diameter of 25.4 mm. The probe is pushed into the product at a speed of 1 mm/s, from a distance of 4 mm. The force required is read from the digital display and is expressed in grams.

The overrun of the whipped composition is calculated from the following formula:

$$\text{Overrun } \% = 100 \times (V_2 - V_1)/V_1$$

where $V_1$ is the volume of the emulsion composition before whipping and $V_2$ is the volume of the aerated emulsion composition upon whipping.

Whippability was considered acceptable if a Stevens value of about 30 to 120 and an overrun of at least 120% were measured.

*Room temperature stability of the whipped products*

Room temperature stability of the whipped products was assessed by determining the Stevens values (as described above) at ambient temperature 2 hours after whipping. Also, rosettes which were piped from the whipped product immediately after whipping, were visually inspected after 4 hours for shape retention and occurrence of synaeresis.

The room temperature stability of the DCA product was considered acceptable if a Stevens value of between 10 and 30 was obtained and good if a Stevens value between 30 and 200 was measured and the piped rosettes retained their shape and did not show any sign of synaeresis.

*Post-hardening of the whipped products*

The occurrence of post-hardening (i.e. undesired hardening upon standing) of the whipped products was determined by measuring the Stevens values of the whipped product after storage at 5 degrees C for 2 hours and 24 hours respectively.

Also, rosettes were piped from the whipped product immediately after whipping. The quality of the rosettes is assessed after storage at 5°C for 4 hours and 24 hours respectively, by a three person expert panel. The DCA product is considered acceptable if the rosettes (i) show good shape retention, (ii) are not crumbling and (iii) do not show substantial post-firming upon storage for 24 hours.

*Acid stability of the whipped product*

The DCA product was whipped at 5°C as described above, 40 wt% of raspberry puree (with respect to the DCA product) was folded into the whipped product and the resulting mixture was piped into rosettes. The raspberry puree has a pH of about 3.13.

The quality of the rosettes is assessed after storage at 5°C for 4 hours and 24 hours respectively, by a three person expert panel. The DCA product is considered acceptable if the rosettes (i) show good shape retention, (ii) are not crumbling and (iii) do not show substantial post-firming upon storage for 24 hours.

*Heat stability of the emulsion as an additive*

A mushroom sauce was prepared by frying 100 grams of sliced mushrooms in 20 grams of butter until the mushrooms were transparent. 25 grams of white wine were added to the hot mushrooms and allowed to reduce. After addition of 200 grams of jus de veau lié, the mixture is brought to the boil and reduced until about half the original volume. 100 Grams of the DCA product is added. Subsequently, the sauce is reduced to a desired thickness is reached (approximately half the original volume).

The quality of the sauce is assessed by a three person expert panel. The dairy cream alternative product is considered acceptable if (i) no grease drops are present on the finished sauce, (ii) no visible aggregation or flocculation of the DCA occurred upon reduction of the sauce, and (iii) the sauce retains about the same thickness upon simmering at 85°C for 3 hours. The thickness is assessed by direct observation.

*Heat stability of the emulsion as an additive in acidic media*

The heat stability of the emulsion composition as an additive in acidic media was tested by preparing an acidic Polish-style tomato soup and an acidic white wine reduction sauce.

*Polish-style tomato soup*

A Polish-style tomato soup with a pH of about 4.3 was prepared by mixing 500 ml of water, 50 grams of tomato paste (28 to 30% concentrate) and 10 grams of chicken stock powder, and bringing the mixture to the boil whilst stirring. Subsequently, 50 grams of the DCA product is added to the boiling soup.

*Reduction sauce*

A white wine reduction sauce with a pH of about 3.16 was prepared by melting 5 grams of butter together with 75 grams of finely chopped shallots, adding 125 ml of white wine and reduction of the mixture with moderate heating until almost all water liquid had evaporated. Subsequently, 125 ml of fish fond (Unilever Food Solutions Garde d'Or liquid fond) was added and the mixture was reduced again, until about half the original volume. Finally, 300 ml of the DCA product was added, and again the sauce was reduced until about half the original volume.

The quality of the soup and the sauce is assessed by a three person expert panel. The DCA product is considered acceptable if (i) both the soup and the reduction sauce display a homogeneous creamy texture and (ii) the DCA product does not aggregate or flocculate upon addition to both the soup mixture and the reduction sauce mixture and (iii) the DCA product does not aggregate or flocculate upon final reduction of the sauce.

*Rating of the results*

The results of the qualitative tests in Tables 7 to 11 are rated according to the following scheme:

| ++ | good |
|---|---|
| + | acceptable |
| - | not acceptable |
| nd | not determined |

*Examples 1 and 2, Comparative Examples C1 and C2*

Examples 1 and 2 and comparative examples C1 and C2 show the importance of the selection of SFAEs with the right type of fatty acid residues. The compositions of Examples 1, 2, C1, and C2 are specified in Table 2 and are all identical except for the selected SFAE emulsifier. Example 1 and 2 are compositions according to the present invention.

**Table 7**

| Examples | 1 | 2 | C1 | C2 |
|---|---|---|---|---|
| **Whippability** | | | | |
| whipping time (min) | 4 | nd | 10 | nd |
| stevens (g) | 13 | | 16 | |
| overrun (%) | 225 | | 84 | |

(continued)

| Examples | 1 | 2 | C1 | C2 |
|---|---|---|---|---|
| overall | + | + | + | nd |
| **Acidic heat stability** (tomato soup) | | | | |
| homogeneity | ++ | ++ | - | - |
| no flocculation | ++ | ++ | - | - |
| overall | ++ | + | - | - |

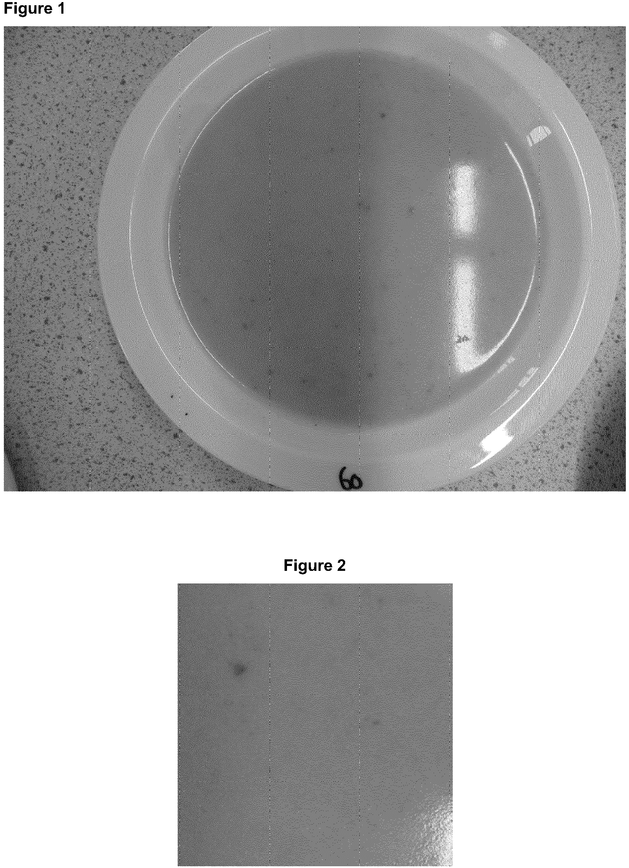

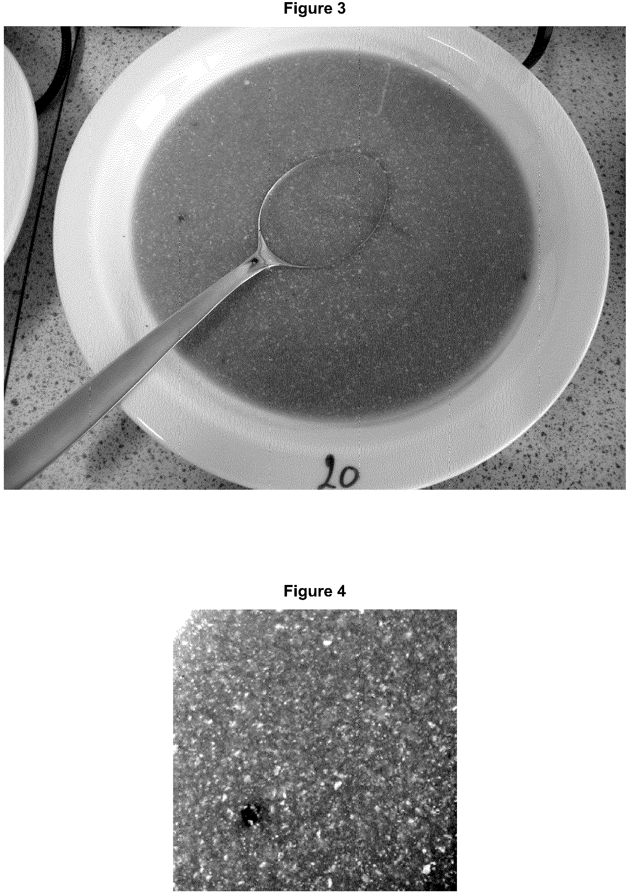

Although all the oil-in-water emulsion compositions of 1, 2, C1, and C2 display acceptable whippability properties (see Table 7), only the compositions of Examples 1 and 2 are suitable for use in hot acidic media. Only with the DCAs of Examples 1 and 2, a Polish-style soup with a homogeneous and smooth creamy texture was obtained without any sign of aggregation or flocculation of the DCA products. The soup prepared with the oil-in-water emulsion compositions of Example 2 is depicted in Figure 1. A close-up of figure 1 is shown in Figure 2. The soup prepared with the oil-in-water emulsion composition of Example 1 looked very similar. In contrast, severe aggregation and flocculation of the DCA products was observed with the DCAs of Comparative Examples C1 and C2, and a soup with a smooth and creamy texture was not obtained. The soup prepared with the oil-in-water emulsion compositions of Comparative Example C2 is depicted in Figure 3. A close-up of Figure 3 is shown in Figure 4. The flocs and aggregates are clearly visible in these photographs.

In conclusion, the examples 1, 2, C1, and C2 clearly show that oil-in-water emulsion compositions comprising sucrose esters of fatty acids other than palmitic acid or stearic acid do not have the properties desired for a multipurpose DCA, even if the sucrose ester mixtures used comprise a high proportion of monoester.

*Example 3, Comparative Examples C3 to C9*

Example 3 and Comparative Examples C3 to C9 were formulated according to Tables 3 and 4. Example 3 and comparative examples C3 and C4 show the effect of the amount of milk powder and hence the amount of milk protein in the composition. Comparative Examples C5 to C8 show the effect of the type of protein used in the composition. Comparative Example C9 shows the effect of whey protein in combination with PGPR. The test results obtained with these compositions are summarised in Tables 8 and 9.

**Table 8**

| Examples | 3 | C3 | C4 | C5 | C6 | C7 | C8 | C9 |
|---|---|---|---|---|---|---|---|---|
| **Processing** | ++ | ++ | - | ++ | ++ | ++ | - | ++ |
| **Whippability** | | | | | | | | |
| whipping time (min) | 2:45 | 2:40 | nd | 10:00 | 10:00 | 3:30 | 10:00 | 7:30 |
| stevens (g) | 30 | 26 | nd | 6 | nd | 9 | nd | 15 |
| overrun (%) | 158 | 179 | nd | 75 | nd | 150 | nd | 181 |
| overall | + | + | nd | - | - | - | nd | - |
| **Acidic heat stability** (tomato soup) | | | | | | | | |
| homogeneity | ++ | ++ | nd | ++ | ++ | ++ | ++ | ++ |
| no flocculation | ++ | ++ | nd | ++ | ++ | ++ | ++ | ++ |
| overall | ++ | ++ | nd | ++ | ++ | ++ | ++ | ++ |

**Table** 9

| Examples Heat stability as additive (mushroom sauce) | 3 | C3 |
|---|---|---|
| no grease drops | + | - |
| no aggregation | ++ | + |
| overall | + | - |
| **Acidic heat stability** (reduction sauce) | | |
| homogeneity | + | - |

(continued)

| Acidic heat stability (reduction sauce) | | |
|---|---|---|
| no flocculation | ++ | - |
| overall | + | - |

*Effect of milk protein content*

Examples 3, C3 and C4 all comprised skim milk powder (SMP). Example 3 was according to the invention and yielded good whippability and acidic heat stability in a Polish-style tomato soup. Comparative example C3 comprised too little protein, giving a relatively weak whipped cream. Comparative example C4 comprised too much protein: the product became so thick it could not be made into a homogenised DCA. No further application tests were performed with C4.

The examples 3 and C3 displayed a difference upon application in hot sauces, as summarised in Table 9. A mushroom sauce prepared with the product of Example 3 showed an acceptably low degree of fat separation (grease drops), whereas fat separation was unacceptably strong for Comparative Example C3. The (white wine) reduction sauce of C3 showed strong flocculation and separation. This was not observed for the reduction sauce of Ex 3. Both sauces showed some thickening over time, which was considered acceptable.

The taste and flavour and mouthfeel of the products from examples 3 and C3 were compared, both for the pure product (as-is and for the whipped product) and for the above sauces. The tasting of the producst was performed by a three-person expert panel. The general impression was that whereas C3 tasted bland and watery, Example 3 had a richer, creamier and more dairy-like taste. This was tasted both in the pure products and in the sauces. The mushroom sauce and the reduction sauce of Example C3 were considered bitter and watery, but those of Ex.3 were considered acceptably creamy. Overall, the taste of Ex 3 was considered acceptable, unlike that of Ex C3.

The experiments C3 and C4 thus displayed that both too low and too high a protein content led to defects in the compositions, rendering them unsuitable as multipurpose DCAs.

*Effect of whey protein*

In Comparative Examples C5 and C6, the SMP was replaced by WPC80, such that the same total amount of protein was present as in C3 and 3, respectively. Both C5 and C6 could not be whipped to sufficient firmness within 10 minutes. These examples show that an acceptably whippable DCA could not be prepared with a combination of whey protein and SFAE. In contrast, the combination of dairy protein from a concentrated milk derivative (such as skim milk powder) with an SFAE according to the present invention yielded an acceptably whippable DCA (Example 3).

In Comparative Examples C7 and C8, half of the protein was provided by SMP and the other half by WPC80. The premix of C8 showed unacceptable processing characteristics, since it could not be sterilised without the product getting too thick. C7 was whipped until the firmness increased no further (3:30 mins), but still it was unacceptably low. C8 could not be turned into a whipped cream altogether. Comparing C7 and C8 to C5 and C6 reveals that no acceptable multipurpose DCA can be prepared, even if half the whey protein is replaced by dairy protein derived from a concentrated milk derivative (SMP).

*Effect of PGPR*

Comparative example C9 is an example according to JP 2008/154469, comprising whey protein, SFAE and polyglycerol polyricinoelate (PGPR). A Polish-style tomato soup could be made with C9, indicating acceptable acidic heat stability. However, the whippability of C9 was not acceptable, based on the long whipping time combined with the relatively low firmness of the product. Comparing C9 to Example 3 shows that a superior product is obtained based on the combination of a concentrated milk derivative (SMP) and a SFAE according to the present invention.

*Effect of pH*

In order to assess the effect of the pH on the processability of the DCA, samples were taken of the premixes of Example 3 and Comparative Examples C3 to C9 after the combined aqueous and fat phase had been mixed with the high shear mixer. The samples (with pH as specified in Table 8) were acidified with lactic acid to a pH of 4.5 to 4.8. Upon standing and cooling to room temperature, all samples solidified into a stiff gel-like consistency. Thus, such acidified premixes cannot be further processed and would also not lead to whippable DCA compositions..

In summary of the above results, Example 3 shows that an oil-in-water emulsion composition at a pH between 6 and 8, comprising a combination of milk protein derived from a milk powder such as SMP with a SFAE according to the invention yields a multipurpose DCA, with good processability, good acidic heat stability and good whippability.

*Examples 4 to 8*

The DCAs of the Examples 4 to 8 are all compositions according to the present invention. Their suitability as a multipurpose DCA is exemplified by their excellent properties as shown in Tables 10 and 11.

**Table 10**

| Examples | 4 | 5 | 6 | 7 | 8 |
|---|---|---|---|---|---|
| **Whippability** | | | | | |
| whipping time (min) | 4 | 3.2 | 3.23 | 2.53 | 2.21 |
| Stevens (g) | 79 | 71 | 63 | 72 | 60 |
| overrun (%) | 184 | 203 | 183 | 203 | 206 |
| overall | ++ | ++ | ++ | ++ | ++ |
| **RT Stability** | | | | | |
| Stevens RT 2h (g) | 155 | 84 | 95 | 47 | 81 |
| shape retention | ++ | ++ | ++ | ++ | ++ |
| no synaeresis | ++ | ++ | ++ | ++ | ++ |
| overall | ++ | ++ | ++ | ++ | ++ |
| **Post-hardening** | | | | | |
| Stevens 5°C 2h (g) | 191 | 95 | 136 | 81 | 70 |
| Stevens 5°C 24h (g) | 167 | 48 | 117 | 42 | 49 |
| overall | ++ | ++ | ++ | ++ | ++ |

The examples 4 to 8 show good whippability. In all cases the desired firmness (Stevens value of between 50 and 80) and an overrun of more than 160% was obtained within 4 minutes. The whipped creams of Examples 4 to 8 also show good room temperature stability. All samples show good shape retention and no synaeresis upon standing at room temperature for 2 hours. Their Stevens values after standing at room temperature for 2 hours are within a range of about 50 to about 155, indicating acceptable softening or hardening upon standing.

The whipped creams of Examples 4 to 8 also show no post-hardening: Upon storage at 5 degrees C for 24 hours, the Stevens values of the whipped creams of Examples 5, 7, and 8 decreased slightly. The Stevens values of the whipped cream of Examples 4 and 6 increased but still are acceptable.

The whipped creams of Examples 4 to 8 also showed excellent acid stability: Upon folding-in of raspberry puree, all whipped creams of Examples 4 to 8 displayed good results in terms of shape retention, the absence of crumbling and post-hardening, even upon storage for 24 hours.

**Table 11**

| Examples | 4 | 5 | 6 | 7 | 8 |
|---|---|---|---|---|---|
| **Acid stability of whipped product** (Raspberry puree) | | | | | |
| shape retention | ++ | ++ | ++ | nd | ++ |
| no crumbling | ++ | ++ | ++ | nd | ++ |
| no post-hardening 5°C 4h | ++ | ++ | ++ | nd | ++ |
| no post-hardening 5°C 24h | ++ | ++ | ++ | nd | ++ |
| overall | ++ | ++ | ++ | nd | ++ |
| **Heat stability as additive** (mushroom sauce) | | | | | |
| no grease drops | ++ | ++ | ++ | ++ | ++ |
| no aggregation | ++ | ++ | ++ | ++ | ++ |
| thickness 85°C 3h | ++ | ++ | ++ | ++ | ++ |
| overall | ++ | ++ | ++ | ++ | ++ |
| **Acidic heat stability** (tomato soup and reduction sauce) | | | | | |

(continued)

| Examples | 4 | 5 | 6 | 7 | 8 |
|---|---|---|---|---|---|
| homogeneity | ++ | ++ | ++ | ++ | ++ |
| no flocculation | ++ | ++ | ++ | ++ | ++ |
| overall | ++ | ++ | ++ | ++ | ++ |

The oil-in-water emulsion compositions of Examples 4 to 8 also showed excellent heat stability when used as an additive without whipping in mushroom sauces. All mushroom sauces displayed good properties: no grease drops were observed on the finished sauces, no aggregation or flocculation of the DCA occurred upon reduction of the sauces, and the sauces retained about the same thickness upon simmering at 85°C for 3 hours.

Finally, the oil-in-water emulsion compositions of Examples 4 to 8 also show excellent properties with respect to their applicability in hot acidic media, such as Polish-style tomato soup and a white wine reduction sauce. With all of the DCAs of Examples 4 to 8, a Polish-style tomato soup with a homogeneous and smooth creamy texture was obtained and there was no sign of aggregation or flocculation of the DCA products. The soups prepared with the oil-in-water emulsion compositions of Examples 4 to 8 all looked similar to Figures 1 and 2.

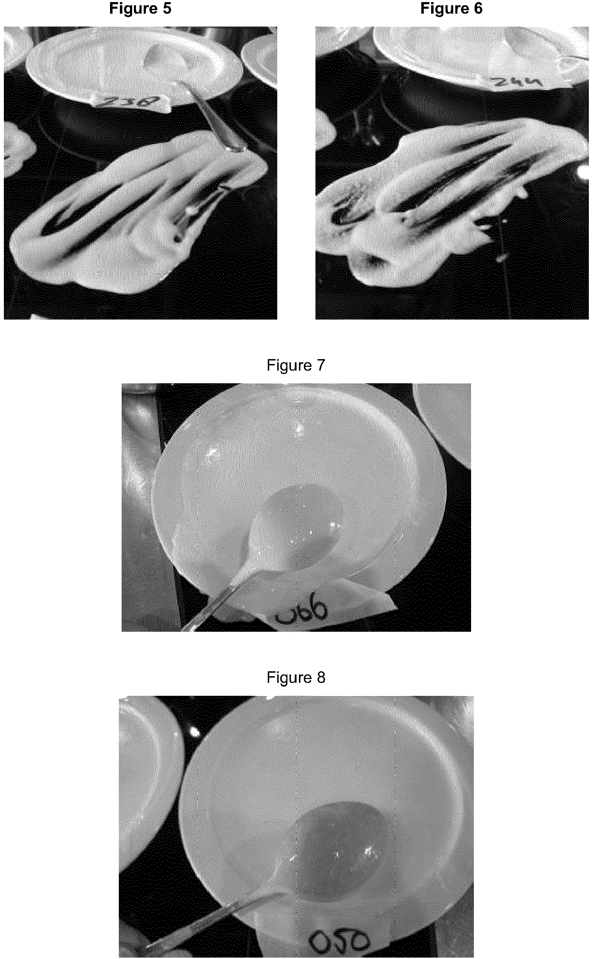

Similarly, white wine reduction sauces with a pH of about 3.16, prepared with the compositions of Examples 4 to 8, did not flocculate or aggregate, neither after addition of the respective oil-in-water emulsion composition, nor after subsequent further reduction of the sauces. For example, Figure 5 shows that the reduction sauce of Example 4 shows no sign of aggregation of flocculation, upon spreading and Figure 8 shows that it forms a smooth film upon spooning.

In summary, the Examples 4 to 8 reveal that the edible oil-in-water emulsions according to the present invention serve as excellent multipurpose DCAs.

*Comparative examples C10 to C12*

The oil-in-water emulsion compositions of comparative examples C10, C11, and C12 are all similar to the composition of Example 5, except that different SFAEs are used (Table 6). These SFAEs are not according to the present invention.

Although the comparative examples C10, C11, and C12 display good whippability properties (see Table 12), they are not suitable for use in hot acidic media.

With the oil-in-water emulsion compositions of Comparative Examples C10 to C12, acceptable Polish-style soups could be prepared. However, white whine reduction sauces (with a pH of about 3.16) prepared with the compositions of Comparative Examples C10 to C12 showed severe flocculation and aggregation of the DCA compositions. For example, Figure 6 shows that the reduction sauce of Comparative Example C12 shows lumps and signs of aggregation and flocculation upon spreading; Figure 8 shows that it does not form a smooth film upon spooning.

Thus, these results show that the compositions of Comparative Examples C10 to C12 are not suitable as multipurpose DCAs. Although the SFAEs used in C10 to C12 consist of sucrose stearates and sucrose palmitates, they are outside the scope of suitable SFAEs according to the present invention, because their average degrees of substitution are too high (see Table 1) and their HLB values are too low.

**Table 12**

| Comparative Examples | C10 | C11 | C12 |
|---|---|---|---|
| **Whippability** | | | |
| whipping time (min) | 2.47 | 1.55 | 2.52 |
| stevens (g) | 53 | 94 | 103 |
| overrun (%) | 172 | 203 | 205 |
| overall | ++ | ++ | ++ |
| **RT Stability** | | | |
| Stevens RT 2h (g) | 95 | 74 | 59 |
| shape retention | nd | nd | nd |
| no synaeresis | nd | nd | nd |
| overall | nd | nd | nd |
| **Post-hardening** | | | |
| Stevens 5°C 2h (g) | 65 | 114 | 87 |

(continued)

| Comparative Examples | C10 | C11 | C12 |
|---|---|---|---|
| Stevens 5°C 24h (g) | 64 | 60 | 70 |
| overall | ++ | ++ | ++ |
| **Acidic heat stability** (tomato soup and reduction sauce) | | | |
| homogeneity | - | - | - |
| no flocculation | - | - | - |
| overall | - | - | - |

**Claims**

1. Edible oil-in-water emulsion composition comprising

| 18 to 50 wt% | of a fat phase |
|---|---|
| 1.5 to 4 wt% | of protein, |
| 0.2 to 1 wt% | of sucrose fatty acid esters wherein at least 70 wt% of the total amount of sucrose fatty acid esters is sucrose monostearate or sucrose monopalmitate or a combination thereof, and |
| at least 35 wt% | of water; |

and wherein

i. the composition has a pH of between 6 and 8;
ii. the sucrose fatty acid esters have a hydrophilic to lipophilic balance (HLB) of greater than 15; and
iii. the composition comprises 5 to 10 wt% of concentrated milk derivatives, such as buttermilk powder, skimmed milk powder, or whole milk powder.

2. Edible oil-in-water emulsion composition according to claim 1 wherein the fat phase has a solid fat content of 40 wt% or more at 5 degrees C, and of 5 wt% or less at 35 degrees C.

3. Edible oil-in-water emulsion composition according to any of claims 1 to 2 wherein the fat phase comprises vegetable oil or vegetable fat or a combination thereof.

4. Edible oil-in-water emulsion composition according to any of claims 1 to 3 wherein said proteins comprise dairy proteins.

5. Edible oil-in-water emulsion composition according to any of claims 1 to 4 wherein the concentrated milk derivatives are selected from buttermilk powder, skimmed milk powder and combinations thereof.

6. Edible oil-in-water emulsion composition according to any of claims 1 to 5 comprising from 0.2 to 0.50 wt%, preferably from 0.25 to 0.45 wt% of the sucrose fatty acid esters.

7. Edible oil-in-water emulsion composition according to any of claims 1 to 6 wherein at least 72 wt%, preferably at least 74 wt% of the sucrose fatty acid esters is sucrose monostearate or sucrose monopalmitate or a combination thereof.

8. Edible oil-in-water emulsion composition according to any of claims 1 to 7, comprising 0.01 to 0.4 wt% of fat-soluble emulsifiers.

9. Edible oil-in-water emulsion composition according to any of claims 1 to 8 wherein the fat-soluble emulsifiers are selected from monoglycerides, diglycerides, lecithins, lactic acid esters of mono- and diglycerides of fatty acids, diacetyl tartaric acid esters of mono- and diglycerides of fatty acids, and combinations thereof.

10. Edible oil-in-water emulsion composition according to any of claims 1 to 9 comprising 0.3 to 2.5 wt% of thickeners, preferably selected from starches and gums.

11. Process for manufacturing an edible oil-in-water emulsion composition according to any of claims 1 to 10, comprising the steps of

   a. preparing an aqueous phase,
   b. preparing a fat phase, and
   c. mixing the aqueous phase and the fat phase and homogenising the mixture to an edible emulsion.

12. Process according to claim 11, wherein at least 50 wt-%, preferably at least 75 wt-%, more preferably at least wt-90% of the sucrose fatty acid ester is added during step c.

13. Use of an edible oil-in-water emulsion composition according to any of claims 1 to 10 as a whipping cream.

14. Use of an edible oil-in-water emulsion composition according to any of claims 1 to 10 as an additive in a food product, preferably in a liquid food product or a solid or solidifiable food product.

15. Use according to claim 14, wherein the food product has a pH of between 3 and 8 and preferably has a temperature of between minus 20 degrees C and 120 degrees C.


**Patentansprüche**

1. Essbare Öl-in-Wasser-Emulsionszusammensetzung, umfassend
   18 bis 50 Gew.-% einer Fettphase,
   1,5 bis 4 Gew.-% Protein,
   0,2 bis 1 Gew.-% Sucrosefettsäureester, worin mindestens 70 Gew.-% der Gesamtmenge der Sucrosefettsäureester Sucrosemonostearat oder Sucrosemonopalmitat oder eine Kombination davon ist,
   und mindestens 35 Gew.-% Wasser,
   und wobei

   i. die Zusammensetzung einen pH zwischen 6 und 8 aufweist,
   ii. die Sucrosefettsäureester eine hydrophile-lipophile Balance (HLB) von mehr als 15 aufweisen und
   iii. die Zusammensetzung 5 bis 10 Gew.-% konzentrierte Milchderivate, wie Buttermilchpulver, Magermilchpulver oder Vollmilchpulver, umfasst.

2. Essbare Öl-in-Wasser-Emulsionszusammensetzung gemäß Anspruch 1, wobei die Fettphase einen Festfettgehalt von 40 Gew.-% oder mehr bei 5 Grad C und von 5 Gew.-% oder weniger bei 35 Grad C aufweist.

3. Essbare Öl-in-Wasser-Emulsionszusammensetzung gemäß irgendeinem der Ansprüche 1 bis 2, wobei die Fettphase ein Pflanzenöl oder Pflanzenfett oder eine Kombination davon umfasst.

4. Essbare Öl-in-Wasser-Emulsionszusammensetzung gemäß irgendeinem der Ansprüche 1 bis 3, wobei die Proteine Milchproteine umfassen.

5. Essbare Öl-in-Wasser-Emulsionszusammensetzung gemäß irgendeinem der Ansprüche 1 bis 4, wobei die konzentrierten Milchderivate unter Buttermilchpulver, Magermilchpulver und Kombinationen davon ausgewählt sind.

6. Essbare Öl-in-Wasser-Emulsionszusammensetzung gemäß irgendeinem der Ansprüche 1 bis 5, umfassend 0,2 bis 0,50 Gew.-%, vorzugsweise 0,25 bis 0,45 Gew.-% Sucrosefettsäureester.

7. Essbare Öl-in-Wasser-Emulsionszusammensetzung gemäß irgendeinem der Ansprüche 1 bis 6, wobei mindestens 72 Gew.-%, vorzugsweise mindestens 74 Gew.-% der Sucrosefettsäureester Sucrosemonostearat oder Sucrosemonopalmitat oder eine Mischung davon darstellen.

8. Essbare Öl-in-Wasser-Emulsionszusammensetzung gemäß irgendeinem der Ansprüche 1 bis 7, umfassend 0,01 bis 0,4 Gew.-% fettlösliche Emulgatoren.

9. Essbare Öl-in-Wasser-Emulsionszusammensetzung gemäß irgendeinem der Ansprüche 1 bis 8, wobei die fettlöslichen Emulgatoren unter Monoglyceriden, Diglyceriden, Lecithinen, Milchsäureestern von Mono- und Diglyceriden von Fettsäuren, Diacetylweinsäureestern von Mono- oder Diglyceriden von Fettsäuren und Kombinationen davon ausgewählt sind.

10. Essbare Öl-in-Wasser-Emulsionszusammensetzung gemäß irgendeinem der Ansprüche 1 bis 9, umfassend 0,3 bis 2,5 Gew.-% Verdickungsmittel, vorzugsweise unter Stärken und Gummis ausgewählt.

11. Verfahren zur Herstellung einer essbaren Öl-in-Wasser-Emulsionszusammensetzung gemäß irgendeinem der Ansprüche 1 bis 10, umfassend die Schritte

a. Herstellen einer wässrigen Phase,
b. Herstellen einer Fettphase und
c. Mischen der wässrigen Phase und der Fettphase und Homogenisieren der Mischung zu einer essbaren Emulsion.

12. Verfahren gemäß Anspruch 11, wobei mindestens 50 Gew.-%, vorzugsweise mindestens 75 Gew.-%, besonders bevorzugt mindestens 90 Gew.-% der Sucrosefettsäureester während des Schritts c zugegeben werden.

13. Verwendung einer essbaren Öl-in-Wasser-Emulsionszusammensetzung gemäß irgendeinem der Ansprüche 1 bis 10 als Schlagsahne.

14. Verwendung einer essbaren Öl-in-Wasser-Emulsionszusammensetzung gemäß irgendeinem der Ansprüche 1 bis 10 als ein Additiv in einem Lebensmittel, vorzugsweise in einem flüssigen Lebensmittel oder in einem festen oder härtbaren Lebensmittel.

15. Verwendung gemäß Anspruch 14, wobei das Lebensmittel einen pH zwischen 3 und 8 und vorzugsweise eine Temperatur zwischen minus 20 Grad C und 120 Grad C aufweist.


**Revendications**

1. Composition d'émulsion huile-dans-eau comestible comprenant

de 18 à 50 %     en masse d'une phase de graisse
de 1,5 à 4 %     en masse de protéine,
de 0,2 à 1 %     en masse d'esters d'acides gras de saccharose où au moins 70 % en masse de la quantité totale d'esters d'acides gras de saccharose sont du monostéarate de saccharose ou du monopalmitate de saccharose ou une combinaison de ceux-ci, et
au moins 35 %     en masse d'eau ;

et dans laquelle

i. la composition présente un pH de 6 à 8 ;
ii. les esters d'acides gras de saccharose présentent un équilibre hydrophile à lipophile (HLB) supérieur à 15 ; et
iii. la composition comprend de 5 à 10 % en masse de dérivés de lait concentré, tels que de la poudre de babeurre, de la poudre de lait écrémé, ou de la poudre de lait entier.

2. Composition d'émulsion huile-dans-eau comestible selon la revendication 1, dans laquelle la phase de graisse présente une teneur en graisse solide de 40 % en masse ou supérieure à 5 degrés C, et de 5 % en masse ou inférieure à 35 degrés C.

3. Composition d'émulsion huile-dans-eau comestible selon l'une quelconque des revendications 1 à 2, dans laquelle la phase de graisse comprend une huile végétale ou une graisse végétale ou une combinaison de celles-ci.

4. Composition d'émulsion huile-dans-eau comestible selon l'une quelconque des revendications 1 à 3, dans laquelle lesdites protéines comprennent des protéines laitières.

5. Composition d'émulsion huile-dans-eau comestible selon l'une quelconque des revendications 1 à 4, dans laquelle les dérivés de lait concentré sont choisis parmi de la poudre de babeurre, de la poudre de lait écrémé et des combinaisons de celles-ci.

6. Composition d'émulsion huile-dans-eau comestible selon l'une quelconque des revendications 1 à 5, comprenant de 0,2 à 0,50 % en masse, de préférence de 0,25 à 0,45 % en masse des esters d'acides gras de saccharose.

7. Composition d'émulsion huile-dans-eau comestible selon l'une quelconque des revendications 1 à 6, dans laquelle au moins 72 % en masse, de préférence au moins 74 % en masse des esters d'acides gras de saccharose sont du monostéarate de saccharose ou du monopalmitate de saccharose ou une combinaison de ceux-ci.

8. Composition d'émulsion huile-dans-eau comestible selon l'une quelconque des revendications 1 à 7, comprenant de 0,01 à 0,4 % en masse d'émulsionnants solubles dans de la graisse.

9. Composition d'émulsion huile-dans-eau comestible selon l'une quelconque des revendications 1 à 8, dans laquelle les émulsionnants solubles dans de la graisse sont choisis parmi des monoglycérides, des diglycérides, des lécithines, des esters d'acide lactique de mono- et diglycérides d'acides gras, des esters d'acide diacétyltartarique de mono-et diglycérides d'acides gras, et des combinaisons de ceux-ci.

10. Composition d'émulsion huile-dans-eau comestible selon l'une quelconque des revendications 1 à 9 comprenant de 0,3 à 2,5 % en masse d'épaississants, de préférence choisis parmi des amidons et des gommes.

11. Procédé pour la fabrication d'une composition d'émulsion huile-dans-eau comestible selon l'une quelconque des revendications 1 à 10, comprenant les étapes de

    a. préparation d'une phase aqueuse,
    b. préparation d'une phase de graisse, et
    c. mélange de la phase aqueuse et de la phase de graisse et homogénéisation du mélange en une émulsion comestible.

12. Procédé selon la revendication 11, dans lequel au moins 50 % en masse, de préférence au moins 75 % en masse, encore mieux au moins 90 % en masse de l'ester d'acide gras de saccharose sont ajoutés pendant l'étape c.

13. Utilisation d'une composition d'émulsion huile-dans-eau comestible selon l'une quelconque des revendications 1 à 10 comme une crème à fouetter.

14. Utilisation d'une composition d'émulsion huile-dans-eau comestible selon l'une quelconque des revendications 1 à 10 comme un additif dans un produit alimentaire, de préférence dans un produit alimentaire liquide ou un produit alimentaire solide ou solidifiable.

15. Utilisation selon la revendication 14, dans laquelle le produit alimentaire présente un pH de 3 à 8 et présente de préférence une température de moins 20 degrés C à 120 degrés C.

**Figure 1**

**Figure 2**

## Figure 3

## Figure 4

**Figure 5**

**Figure 6**

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0294119 A1
- EP 0436994 B1
- EP 0455288 A1
- WO 9417672 A1
- WO 2008110502 A1
- JP 1051054 A
- EP 0402090 B1

- EP 1430790 B1
- JP 56021553 A
- US 20090291183 A1
- US 20090291183 A
- JP 2008154469 A
- US 20050123667 A